(19) Europäisches Patentamt / European Patent Office / Office européen des brevets

(11) **EP 3 671 568 A1**

(12) **EUROPEAN PATENT APPLICATION**

(43) Date of publication:
**24.06.2020 Bulletin 2020/26**

(51) Int Cl.:
**G06N 3/04** *(2006.01)*     **G06N 3/08** *(2006.01)*

(21) Application number: **18213163.1**

(22) Date of filing: **17.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **IMEC vzw**
**3001 Leuven (BE)**

(72) Inventor: **VERHOEF, Bram**
**3001 Leuven (BE)**

(74) Representative: **DenK iP**
**Hundelgemsesteenweg 1116**
**9820 Merelbeke (BE)**

(54) **BINARY RECURRENT NEURAL NETWORK INFERENCE TECHNIQUE**

(57) A computer-implemented prediction method and related training method using recurrent neural networks are disclosed. The prediction method provides a sequence of input data (X) that is applicable to a plurality of input connections (15a-b), a plurality of hidden layer connections (12, 14a-b), and an ordered sequence of hidden layers (3) comprising at least one recurrent hidden layer (4). Each hidden layer connection has an associated binary-valued hidden layer weight, and each input connection (15a-b) is associated with a binary-valued input weight. For each of a plurality of time steps a derived hidden state vector ($h^n$) is binarized in each hidden layer and a binary-valued vector representation of a next input datum (x) of the sequence of input data (X) is applied to the input connections (15a-b). For each hidden unit input (9, 10, 11), a first sum of connected weighted hidden states and a second sum of connected weighted input data is computed and linear combination thereof is determining an input state. At least for the at least one recurrent hidden layer (4), the determined input state vectors (S) are individually modified through layer-normalization and a new hidden state vector ($h^{n+1}$) to be used for the next time step is derived for each hidden layer. A predictive output datum is generated, based on the at least one hidden state vector (h) applied to the hidden unit outputs (13) of the last hidden layer (5b).

**FIG. 1**

## Description

### Field of the invention

The present invention relates to the field of computer- and hardware-implemented machine learning techniques. In particular it relates to energy-efficient implementation of deep learning techniques.

### Background of the invention

State-of-the-art deep neural networks as well as (deep) recurrent neural networks are increasingly successful in performing tasks related to classification, prediction, and analysis of data. They are often trained on dedicated powerful hardware, for which memory and power requirements are of a lesser concern. However, the substantial amount of computational resources, first and foremost memory and computational arithmetic, which are necessary to run a single inference pass on these trained deep neural networks, is considerable and still presents a limiting factor for their large deployment on portable, battery-powered devices or low-power embedded systems having limited memory capacity and limited computational power.

Recent developments exploring sparse (deep) neural network or quantized neural networks, restricting trained weights to low-precision fixed-point numbers, ternary or even binary weights, are already facilitating a more widespread use of deep neural network technology for low-power architectures.

Rastegari et al. "XNOR-Net: ImageNet Classification Using Binary Convolutional Neural Networks", in ECCV 2016 Lecture Notes in Computer Science, vol. 9908, 2016, Springer, Cham, propose a convolutional neural network architecture, called XNOR-networks, for which both the weights and the inputs to the convolutional and fully connected layers are approximated with binary values. This technique is suited for feedforward network architectures without feedback connections and does perform poorly for recurrent neural networks.

Ardakani et al. "Learning Recurrent Binary/Ternary Weights",arXiv e-prints 1809.11086, 2018, propose a learning technique for binary and ternary weight recurrent neural networks. This reduces the memory requirements for the learnt weights and replaces multiply-and-accumulate operations by simpler accumulate operations. Yet, the computational complexity for the latter is still dominated by the full-precision representation of the input and hidden state vectors.

Hou et al. "Loss-aware Binarization of Deep Networks", arXiv e-prints 1611.01600, November 2016, introduce weight binarization for recurrent neural networks which are implemented as long short-term memory layers. They also propose binarization of the network activations (of inputs and hidden states) based on an equivalent formulation of the recurrences in the neural network. This results in reduced memory requirements for the learnt weights and the replacement of multiply-and-accumulate operations for the binarized activations and binarized hidden layer weights by simpler XNOR operations. Binarizing the activations, however, does not replace all the accumulate operations of the recurrent update equation by simpler XNOR operations. Binarizing the activations in a long short-term memory layer work is ambiguous, because it is not sure which outcome of a non-linear activation should be binarized. If this is applied to the non-linear activations of the cell states, the resulting hidden state vectors are non-binary and not suitable for an energy-efficient hardware implementation.

Therefore, there is a need for improved prediction methods using recurrent neural network architectures which also respond to the special needs of low-power hardware platforms.

### Summary of the invention

It is an object of embodiments of the present invention to provide prediction methods and devices, based on recurrent neural network architectures, which have low power and storage capacity requirements without compromising predictive accuracy.

The above objective is accomplished by a computer-implemented method processing device according to the present invention.

In a first aspect, the invention relates to a computer-implemented prediction method that is using recurrent neural networks, and comprises the following steps:

A sequence of input data, which is applicable to a plurality of input connections, is provided and also an ordered sequence of hidden layers comprising at least one recurrent hidden layer. A first and a last hidden layer, respectively, refer to the first and the last hidden layer in the ordered sequence of hidden layers. Each hidden layer comprises a plurality of hidden units, wherein each hidden unit comprises a hidden unit output and a pre-determined number of hidden unit inputs. The hidden units of each hidden layer are adapted for deriving a hidden state vector from at least one input state vector applicable to the hidden unit inputs of that hidden layer. Moreover, each vector component of a state vector is representing that state at a different hidden unit of the same hidden layer. Furthermore, the hidden unit inputs of each hidden layer further are logically organized, depending on their respective functionality in the hidden units, into input groups such that a different input state vector is applicable to each input group. According to some embodiments of the invention, hidden unit inputs may be logically organized into input groups depending on the functional gates they are respectively addressing in the hidden units.

Next, a plurality of hidden layer connections are provided, wherein each hidden layer connection is connecting the hidden unit outputs of each hidden layer to the hidden unit inputs of the hidden layer that is next in the ordered sequence and, if that hidden layer is one of the at least one recurrent hidden layer, to the hidden unit inputs of that same recurrent hidden layer or to the hidden unit inputs of a hidden layer preceding that same recurrent hidden layer in the ordered sequence. Moreover, each hidden layer connection has an associated binary-valued hidden layer weight.

Next, a plurality of input connections are provided, wherein each input connection is connected to the hidden unit inputs of at least the first hidden layer, and wherein each input connection is associated with a binary-valued input weight.

Then, the following steps are performed for each of a plurality of time steps:

An initial hidden state vector is binarized in each hidden layer at a first time step and a derived hidden state vector is binarized in each hidden layer at each subsequent time step in the plurality of time steps. The resulting binarized initial or derived hidden state vectors are applied to the hidden unit outputs of the corresponding hidden layer for obtaining connected hidden states which are weighted by hidden layer weights.

Then, a binary-valued vector representation of a next input datum of the sequence of input data is applied to the input connections for obtaining connected input data which are weighted by input weights.

Next, a first sum of connected weighted hidden states and a second sum of connected weighted input data is computed for each hidden unit input and an input state of an input state vector applicable to that hidden unit input is determined as a linear combination of the computed first and the computed second sum.

This is followed by individually modifying, at least for the at least one recurrent hidden layer, the determined input state vectors that are applicable to the different input groups. Here, individually modifying a determined input state vector for a hidden layer includes layer-normalizing the input state vector, based on time-dependent statistical layer-normalization variables which are derived from at least a part of the ensemble of input states represented by the input state vector. At least a part of the ensemble of input states represented by the input state vector may comprise the full ensemble of input states or may comprise a subset of the full ensemble, obtained, for instance by randomly sampling a subset from the full ensemble.

Next, the determined input state vectors or, if modified, the individually modified determined input state vectors substituting the determined input state vectors, are applied to the applicable hidden unit inputs and a new hidden state vector, to be used for the next time step, is derived for each hidden layer.

For at least a last time step in the plurality of time steps, the new hidden state vector derived for the last hidden layer is applied to the hidden unit outputs of the last hidden layer.

Eventually, a predictive output datum is generated, based on the at least one hidden state vector, which has been applied to the hidden unit outputs of the last hidden layer.

In particular embodiments, the at least one recurrent hidden layer is provided as a recurrent long short-term memory (LSTM) layer, or as a recurrent gated recurrent unit (GRU) layer. Each hidden unit of a LSTM layer or of a GRU layer may comprise functional gates and a storage element for storing therein a cell state. For such particular embodiments, long-scale temporal correlations between different input data items of the sequence of input data are efficiently detectable by virtue of the enabled persistence of a stored cell state.

The ordered sequence of hidden layers may comprise a single recurrent hidden layer or may comprise two or more recurrent hidden layers stacked one on another such that each recurrent hidden layer is receiving connected weighted hidden states from the recurrent hidden layer immediately underneath in the ordered sequence. The ordered sequence of hidden layers may comprise also comprise one or more non-recurrent hidden layers, in addition to the at least one recurrent layer.

According to some embodiments of the invention, an output layer comprising output units and a plurality of output layer connections, each being connected to an output unit at one side and to a hidden output unit of the last hidden layer at the other side, may be provided for generating the predictive output datum. In other embodiments of the invention, an output model may be provided for generating the predictive output datum, based on the at least one hidden state vector, which has been applied to the hidden unit outputs of the last hidden layer and which may be an input for the output model.

According to some embodiments of the invention, an input layer comprising input units may be provided for receiving the sequence of input data and for applying it to the plurality of input connections. In other embodiments of the invention, an input preprocessing unit or model may be providing said sequence of input data.

According to preferred embodiments of the invention, for each time step in the plurality of time steps, the new hidden state vector derived for the at least one recurrent hidden layer may also be layer-normalized at the end of each time step, based on further layer-normalization variables and prior to being binarized in the next time step. Alternatively, the new hidden state vector derived for the at least one recurrent hidden layer may also be layer-normalized at the beginning of each time step, based on further layer-normalization variables and prior to being binarized in that same time step. The further layer-normalization variables for the derived hidden state vector may be time-dependent statistical variables derived from at least part of the ensemble of represented hidden states. Time-dependent statistical variables derived from at least part of the ensemble of represented hidden or input states may include an ensemble mean and a standard deviation for the ensemble with respect to this ensemble mean, or may include outcomes of a maximum operator and a minimum operator acting on this ensemble, or combinations thereof. At least a part of the ensemble of hidden states represented by the hidden state vector may comprise the full ensemble of hidden states or may comprise a subset of the full ensemble, obtained, for instance by randomly sampling a subset from the full ensemble.

Layer-normalizing the input data or the input data and hidden states efficiently copes with the consequences of binarizing data inputs/hidden states, that is with the loss of information under such an extreme reduction of numerical precision, and allows for state-of-the-art prediction performances in binarized recurrent neural networks.

According to some embodiments of the invention, at least one adjustable shift parameter and/or at least one adjustable scaling parameter may be applied to a layer-normalized input state vector for shifting and/or scaling that layer-normalized input state vector, when individually modifying that determined input state vector for each of the plurality of time steps. The at least one adjustable shift parameter and/or at least one adjustable scaling parameter may be adjusted during a training phase of the recurrent neural network.

According to preferred embodiments of the invention, for each time step in the plurality of time steps, the computed first sums and computed second sums may be computed by performing a bitwise XNOR operation, followed by a population count. This is particularly useful in low-power devices carrying out the prediction method steps.

In a second aspect, the invention relates to a training method for training at least the binary-valued weights used for performing a prediction method according to embodiments of the first aspect. The related training method comprises the steps of: providing a training set for supervised learning of weights, providing a corresponding adjustable weight for each binary-valued weight associated with an input connection or a hidden layer connection of the recurrent neural network, initializing the adjustable weights, and performing at least once a training pass. The training set comprising a sequence of input data and a corresponding sequence of target output data. Each training pass comprises: performing the steps of the prediction method, using at least a sub-sequence of input data of the training set as input data applicable to the input connections and using the corresponding adjustable weights subject to a binarization function as binary-valued weights associated with input connections or hidden layer connections of the recurrent neural network, determining a contribution to a cost function, based on a deviation of at least one generated predictive output datum from at least one corresponding target output datum of the training set, and updating the adjustable weights such that the updated adjustable weights reduce the contribution to the cost function. Eventually, each of the updated adjustable weights obtained during the most recent training pass is binarized and the result thereof is assigned to the corresponding binary-valued weight.

In yet another aspect, the invention relates to a processing device which comprises means for carrying out the steps of any of the prediction methods according first aspect. The processing device may also comprise a memory unit for storing and retrieving the binary-valued weights of the recurrent neural network. Such memory unit may be advantageously reduced in area and power consumption as only binary-valued weights are stored and many binary-valued weights may be streamed or transferred per bus cycle after a memory request. The energy cost associated with each retrieved weight is also reduced. The means for carrying out the steps of the prediction method may comprise an arithmetic processing unit for performing a plurality of binary XNOR operations on pairs of single bits and for performing population count operations on results obtained from the plurality of binary XNOR operations. Owing to the binary character of the recurrent neural network with respect to input data and weight, these operations are enabled and are more energy-efficient than multiply and accumulated operations of their non-binary counterparts.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, in which:

FIG. 1 shows an example of a recurrent neural network in accordance with embodiments of the present invention, the recurrent neural network comprising an input layer, an output layer and an ordered sequence of hidden layers including at least one recurrent hidden layer.

FIG. 2 shows an example of a recurrent neural network comprising a long short-term memory (LSTM) recurrent hidden layer in accordance with embodiments of the present invention.

FIG. 3 shows an example of a recurrent neural network comprising a gated recurrent unit (GRU) recurrent hidden layer in accordance with embodiments of the present invention.

FIG.4 and FIG. 5 are flow diagrams describing two exemplary embodiments of the present invention.

FIG. 6 shows an example of a processing device configured for performing a prediction method according to the invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

A recurrent hidden layer, in the context of the present invention, refers to a layer of neural network, for which there is provided at least one recurrent hidden layer connection. A recurrent hidden layer connection is a connection between a hidden unit of the (at least one) recurrent hidden layer in a sequence of hidden layers related to the neural network and the same or another hidden unit of the same or of a different hidden layer in this sequence, wherein said different hidden layer is preceding the recurrent hidden layer in this sequence.

Input data for recurrent neural networks forms generally part of a sequence of input data to be received and output data for recurrent neural networks forms generally part of a sequence of generated or determined output data. Both input data and output data may refer to data points which can be multi-dimensional, e.g. data points represented by vectors. If a sequence of input data is to be received by the recurrent neural network, items of this sequence (an input datum) are received sequentially in time at a first plurality of time steps. Likewise, in a sequence of output data, the items of this sequence are determined or generated sequentially in time at a second plurality of time steps. It can take more than one received item (input datum) of a sequence of input data to produce an item (output datum) of a sequence of output data, meaning that it takes more than one time step of the first plurality of time steps to produce an output datum at one of the second plurality of time steps but it is also possible to have one output datum produced at every time step of the first plurality of time steps (i.e. the time steps of the first and the second plurality of time steps coincide).

Input data for a recurrent neural network used in embodiments of the invention may be provided at an input layer for receiving a sequence of input data or may be directly applied to a set of input connections which are connected to the outputs of a input data preprocessing unit. An input data preprocessing unit may be provided by one or more additional interconnected layers forming an external input-preprocessing neural network, which, when used in combination with a recurrent neural network according to embodiments of the invention, may lead to a larger or extended recurrent neural network.

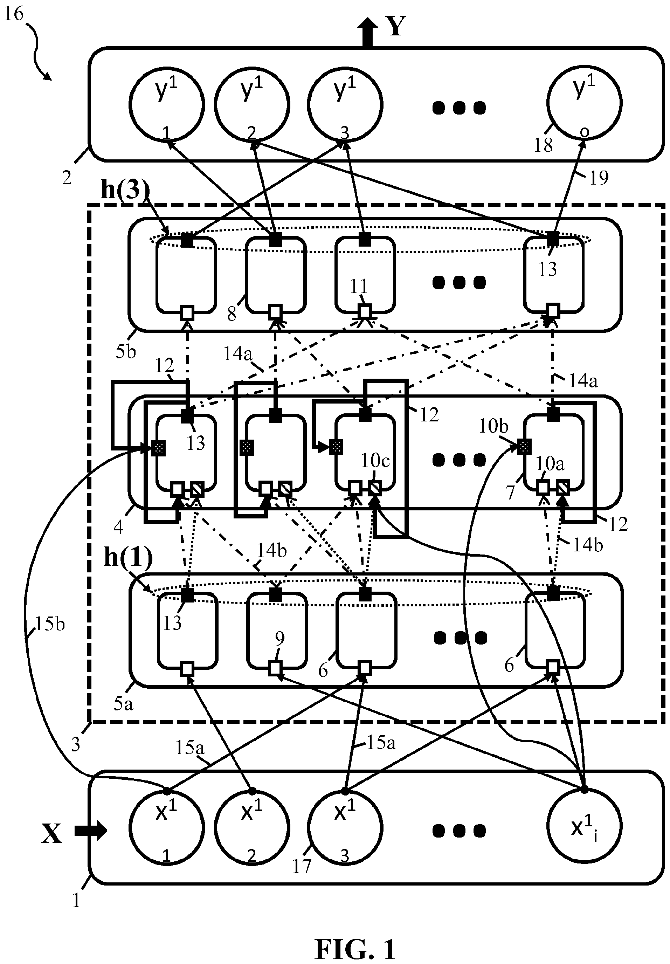

In a first aspect, the present invention relates to a computer-implemented prediction method using recurrent neural networks. FIG. 1 shows an example of a recurrent neural network based on which the prediction method can be performed. In FIG. 1, a recurrent neural network 16 is provided, which comprises an input layer 1 for receiving a sequence of input data $X = [x^1, x^2, ...]$, an output layer 2 for predicting output data Y based on at least a sub-sequence of the received sequence of input data X, and an ordered sequence of hidden layers 3, wherein the ordered sequence of hidden layers includes at least one recurrent hidden layer 4. Input layer 1 is comprising at least one input unit 17 and output layer 2 is comprising at least one output unit 18. The presence of at least one recurrent hidden layer 4 in the ordered sequence of hidden layers 3 predicates the recurrent behavior of the whole neural network 16. A first and the last hidden layer in said ordered sequence of hidden layers 3 are respectively designated as a first hidden layer 5a and a last hidden layer 5b. In FIG. 1, there is only one recurrent hidden layer 4 provided; the first hidden layer 5a and the last hidden layer 5b are non-recurrent (feedforward) hidden layers.

Although an input layer 1 is generally present in a recurrent neural network based on which the prediction method can be performed, this is not a strict necessity. Indeed there may be different embodiments of the invention than the one shown in FIG. 1, for which the input layer is absent and replaced by an input data preprocessing unit, for instance, the outputs of which are directly applicable to a set of input connections connecting these outputs to a plurality of hidden units of one or more hidden layers of the ordered sequence of hidden layers. For instance, said outputs of an input data preprocessing unit may be provided by a plurality of output neurons that belong to a supplementary input data preprocessing neural network, which can be part of the recurrent neural network according to some embodiments of the invention, but does not have to be. Similarly, an output layer 2 is generally present in a recurrent neural network based on which the prediction method can be performed, but this is not a struct requirement and thus shall not be construed as a limitation of the invention. Indeed, computer-implemented prediction methods using recurrent neural networks may be conceived, for which the output layer is absent and for which the predictive output datum is generated based on the at least one hidden state vector applied to the hidden unit outputs of the last hidden layer in the ordered sequence of hidden layers. For instance, an output model accepting the hidden state vector applied to the hidden unit outputs of the last hidden layer in the ordered sequence of hidden layers may be provided to generate the predictive output datum in response to the received input data (sequence). Such output model may include, without being limited thereto, regression models, support vector machines, k-nearest neighbors, etc.

Each hidden layer is comprising a plurality of hidden units 6, 7, 8, each of which is including a hidden unit output 13 and a pre-determined number of hidden unit inputs 9, 10, 11. In FIG. 1, the hidden units 6, 7, 8 of the first hidden layer 5a, the recurrent hidden layer 4 and the last hidden layer 5b are respectively including one hidden unit input 9, three hidden unit inputs 10a-c and again one hidden unit input 11. Furthermore, all hidden units of all hidden layers are including a single hidden unit output 13. However, the invention is not limited to this particular number of hidden unit inputs and hidden unit outputs for each hidden unit in each hidden layer and these numbers may be adapted in function of the particular prediction method, the desired prediction accuracy, the restrictions imposed by specific hardware implementations, etc. Each hidden layer may also have a different number of hidden units 6, 7, 8. For instance, there may be one hidden layer in the ordered sequence of hidden layers 3 which is comprising on the order of tens of hidden units and another hidden layer in the ordered sequence of hidden layers 3 which is comprising on the order of hundreds or thousands of hidden units.

Besides, the hidden units 6, 7, 8 of each hidden layer are adapted for deriving a hidden state vector, h, from at least one input state vector, S, applicable to the hidden unit inputs 9, 10, 11 of that hidden layer, e.g. there exists a functional mapping F between at least one input state vector S and the hidden state vector h to be derived for the hidden units of each hidden layer, with $F: (S, \cdot) \mapsto h$.

A state vector for a given hidden layer, which includes both input state vectors S and hidden state vectors h, is represented by a number of vector components, e.g. $h_k(L)$ or $S_k(L)$ with k = 1, ..., $K_L$ and $K_L$ being the number of hidden units in the L-th hidden layer, wherein each vector component is assigned to a different hidden unit of that hidden layer and is representing the respective state thereof, e.g. an input state or a hidden state of the hidden unit to which the vector component of the input state vector or hidden state vector, respectively, is assigned. There may exist more than one input state vector S per hidden layer, e.g. there are first and second input state vectors $S_a(m)$, $S_b(m)$ with respective vector components $S_{a,k}(m)$, $S_{b,k}(m)$ related to a first input group 'a' and a second input group 'b' for the m-th hidden layer. In such case, the input state vector component $S_{a,i}(m)$ will be assigned to a first hidden unit input (belonging to the first input group 'a') of the i-th hidden unit in the m-th hidden layer and the input state vector component $S_{b,i}(m)$ will be assigned to a second hidden unit input (belonging to the second input group 'b') of the i-th hidden unit in the m-th hidden layer.

Furthermore, the hidden unit inputs 9, 10, 11 of each hidden layer 4, 5a, 5b are logically organized into input groups, depending on their respective functionality in the hidden units 6, 7, 8 of that hidden layer. Referring to FIG. 1, the hidden unit inputs 9, 11 relating to the first hidden layer 5a and the second hidden layer 5b are logically organized into a single input group each. The hidden unit inputs 10a-c relating to the recurrent hidden layer 4, however, are logically organized into three different input groups 10a, 10b and 10c. As a consequence thereof, a distinct input state vector is then applicable to each different input group, e.g. three distinct input state vectors $S_a$, $S_b$ and $S_c$ are respectively applicable to the different input groups 10a, 10b and 10c. The respective functionality of each different input group 10a-c in the hidden units 7 of the recurrent hidden layer 4 may be expressed by their different contribution to the functional mapping F, e.g. via $F: (S_a, S_b, S_c) \mapsto h$, $h = F(r(S_a), z(S_b), u(S_c))$. The same reference signs for logically organized input groups and hidden unit inputs are used for the embodiment relating to FIG. 1, as well as for other embodiments, to avoid unnecessary proliferations of reference signs.

A plurality of input connections 15a, 15b are provided together with the input layer 1 of the recurrent neural network 16 for connecting the input layer 1 to the hidden unit inputs of at least the first hidden layer 5a; e.g. input connections 15a, in FIG. 1, are connecting the input units 17 of the input layer 1 to the hidden unit inputs 9 of the first hidden layer 5a, while input connections 15b are connecting the input units 17 of the input layer 1 to the hidden unit inputs 10b of the second, recurrent hidden layer 4. Furthermore, each input connection 15a, 15b is associated with a binary-valued input weight $w_{inp}$, e.g. a weight that takes one out of two possible values, such as $w_{inp}$ in {0, 1} or $w_{inp}$ in {-1, 1}. The binary-valued input weights each contribute to obtaining connected, weighted input data (e.g. $w_{inp}*x_i$, for $x_i$ being a component of an input data vector x of the sequence of input data X) at the hidden unit inputs 9, 10b for which an input connection 15a, 15b has been provided.

A plurality of hidden layer connections 12, 14a, 14b are also provided for connecting the hidden unit outputs 13 of each hidden layer to the hidden unit inputs of the hidden layer being next in the ordered sequence of hidden layers 3; e.g. hidden layer connections 14a, in FIG. 1, are connecting the outputs 13 of the recurrent hidden layer 4 to the inputs 11 of the last hidden layer 5b, while hidden layer connections 14b are connecting the outputs 13 of the first hidden layer 5a to the inputs 10a and 10c of the second, recurrent hidden layer 4. Although in the specific example of FIG. 1 there are no hidden layer connections 14b given, which are connecting the outputs 13 of the first hidden layer 5a to the inputs 10b of the second, recurrent hidden layer 4, this should not be considered as a limitation of the present invention. Different embodiments may very well provide these hidden layer connections 14b for connecting the outputs 13 of the first hidden layer 5a to the inputs 10b of the second, recurrent hidden layer 4. Importantly, a subset of the plurality of hidden layer connections is allocated for recurrent hidden layer connections 12, connecting the hidden unit outputs of a recurrent hidden layer back to its hidden unit inputs or, more generally, to the hidden unit inputs of a hidden layer preceding that recurrent hidden layer in the ordered sequence of hidden layers 3. Referring to FIG. 1, for example, a plurality of hidden layer connections are recurrent hidden layer connections 12, which are connecting the hidden unit outputs 13 of the recurrent hidden layer 4 back to its hidden unit inputs 10a-c. Not present for the embodiment shown with respect to FIG. 1, but possible, are recurrent hidden layer connections which are connecting hidden unit outputs 13 of the at least one recurrent hidden layer 4 to hidden unit inputs of a preceding hidden layer in the ordered sequence of hidden layer 3, e.g. a recurrent hidden layer connection between a hidden unit output 13 of a hidden unit 7 of the recurrent hidden layer 4 and a hidden unit input 9 of a hidden unit 6 of the first hidden layer 5a. As for the plurality of input connections, also each one of the plurality of hidden layer connections 12, 14a, 14b has an associated binary-valued hidden layer weight, e.g. a weight that takes one out of two possible values, such as $w_{hid}$ in $\{0, 1\}$ or $w_{hid}$ in $\{-1, 1\}$. The binary-valued hidden layer weights each contribute to obtaining connected, weighted hidden states (e.g. $w_{hid}*h_j$, for $h_j$ being a component of a hidden state vector h) at the hidden unit inputs 10a-c, 11 for which a hidden layer connection 14a, 14b has been provided.

The ordered sequence of hidden layers 3 reflects the order of received input data X propagating through the recurrent neural network 16 during an inference pass, passing from one hidden layer to the next hidden layer in the sequence 3, or the same hidden layer in the sequence if this hidden layer is a recurrent one. For instance, in FIG. 1, a input datum $x^1$ of a sequence of input data X received at the input layer 1 is mapped by the first hidden layer 5a and the result of this mapping, the derived hidden state vector h(1) for the first hidden layer 5a, is serving as an input to the next hidden layer in the ordered sequence of hidden layers 3, e.g. as weighted input to the recurrent hidden layer 4. Also the recurrent hidden layer 4 is mapping the received input from the first hidden layer 5a and is sending the mapped results, the derived hidden state vector h(2) for the recurrent hidden layer 4, to the next hidden layer in the ordered sequence of hidden layers 3, e.g. the last hidden layer 5b. In addition thereto, the recurrent hidden layer 4 is sending the mapped results back to its inputs 10a, 10b, 10c. Moreover, the hidden units 7 of the recurrent hidden layer 4 are comprising a plurality of inputs 10b for directly receiving input data $x^1$ from the input layer 1, e.g. input data $x^1$ that is not processed by the first hidden layer 5a before being received by the recurrent hidden layer 4. For many applications it may be sufficient to only have the first hidden layer 5a receiving the input data X from the input layer 1 but there is no obligation in proceeding this way. It may be adequate, in some embodiments of the invention, to have more than one hidden layer receiving the input data X from the input layer 1, e.g. all the hidden layers in the ordered sequence of hidden layers 3 may be configured for receiving input data X from the input layer 1. Eventually, the output units 18 of the output layer 2 are receiving the mapped results of the last hidden layer 5b, e.g. the derived hidden state vector h(3) for the last hidden layer 5b, and, based thereon, are generating an output datum $y^1$ at the output layer 2 for prediction. The output datum $y^1$ typically forms part of a sequence of output data $Y = [y^1, y^2, ...]$. A generation of an output datum may be obtained via another functional mapping, e.g. by applying a 'softmax' activation function to the received hidden state vector for the last hidden layer.

During use of the recurrent neural network 16, the input units 17 of the input layer 1 receive an input datum (e.g. $x^1$, $x^2$, etc.) of a sequence of input data X. The received input datum may be a multi-dimensional vector, e.g. $x^1 = (x^1_1, x^1_2, ..., x^1_{L0})$, individual components of which are assigned to separate input units 17. It is also possible to apply a sub-sequence of the received sequence X to the input units 17 of the input layer, for instance an input data vector x of length L0 may contain a number L0 of subsequent items of the sequence of input data X, $x = (x^1, x^2, ..., x^{L0})$, and the individual vector components of x again being assigned to separate input units 17. The latter assignment of input data is commonly performed for recurrent neural networks, which are good in processing of sequential data with sometimes long-scale correlations between the items comprised in the sequence. Non-limiting examples for the applicability of recurrent neural network-based prediction methods include speech signal recognition, handwriting recognition, weather forecasting, machine translation, language modelling, etc. Often these sequences of input data X represent a time series (e.g. weather data accumulated over time) or a logically ordered structure (e.g. word order in sentences). Embeddings or dictionaries may be used to translate non-numerical input data into numerical input data, e.g. into one-hot input vectors. The recurrent neural network 16 typically has been trained for accurately predicting at its output layer 2, based on the received sequence X or a sub-sequence thereof, a plausible next item for such a sequence, e.g. predicting a handwritten character based on the received time-dependent trace or predicting a plausible next word or word type in a sentence based on the received preceding words in this sentence.

For a complete inference pass yielding a predicted output datum y after T time steps, at least the following steps are repeated, not necessarily in the given order, for each time step n in the plurality of time steps n = 0, 1, ..., t, t+1, ..., T-1:

i. A binary-valued vector representation of a next input datum (e.g. $x^n$) of a sequence of input data X, which may be received by the input units 17 of the input layer 1, is applied to the plurality of input connections 15a, 15b for obtaining connected input data weighted by the input weights associated with the input connections.

ii. In each hidden layer (e.g. hidden layers 4, 5a-b) an initial hidden state vector $h°$ is binarized at a first time step (e.g. n = 0) and a derived hidden state vector $h^n$ is binarized at each subsequent time step (e.g. for all n > 0) in the plurality of time steps. The so binarized hidden state vector for each hidden layer is then applied to the hidden unit outputs 13 of that hidden layer for obtaining connected hidden states weighted by the hidden layer weights associated with the hidden layer connections.

iii. For each hidden unit input 9, 10, 11, a first sum of connected weighted hidden states and a second sum of connected weighted input data is computed. Then an input state $S^n_{,k}$ of an input state vector $S^n$ applicable to that

hidden unit input 9, 10, 11 is determined as a linear combination of the computed first and the computed second sum.

iv. At least for the at least one recurrent hidden layer 4: the determined input state vectors (e.g. $S^n_a$, $S^n_b$, and $S^n_c$) applicable to the different input groups 10a-c are individually modified, wherein the individual modification is achieved by layer-normalizing each input state vector based on layer-normalization variables. Layer-normalization variables for each input state vector are time-dependent statistical variables which are derived from at least a part of the ensemble of represented input states, e.g. the full ensemble of represented input states.

v. The determined input state vectors $S^n$ or, if modified, the individually modified determined input state vectors substituting the determined input state vectors (e.g. $S'^n_a$, $S'^n_b$, and $S'^n_c$ substituting $S^n_a$, $S^n b$, and $S^n_c$, respectively), are applied to the applicable hidden unit inputs 9, 10, 11. Here, the distinct, individually modified input state vectors (e.g. $S'^n_a$, $S'^n_b$, and $S'^n_c$) are respectively applied to the different input groups 10a, 10b and 10c of the at least one recurrent hidden layer 4.

vi. A new hidden state vector $h^{n+1}$ is derived for each hidden layer (e.g. hidden layers 4, 5a, 5b) in the ordered sequence of hidden layers 3.

For the last time step in the plurality of time steps (e.g. n = T-1) at least, the new hidden state vector $h^T$ derived for the last hidden layer 5b is applied to the hidden output units 13 of the last hidden layer 5b and therefore received by the output units 18 of the output layer 2. It is observed that this new hidden state vector $h^T$ is not necessarily binarized, but can include real-valued vector components, for example.

There may be a plurality of output layer connections 19 provided for connecting the hidden unit outputs 13 of the last hidden layer 5b to the output units 18 of the output layer 2. To each of the plurality of output layer connections 19 an output layer weight is assigned, which may or may not be binary-valued, for obtaining connected weighted hidden states as inputs to the output units 18 of the output layer 2. The output layer 2 is configured for generating an output datum y based on the at least one hidden state vector $h^T$ received from the last hidden layer 5b.

In particular embodiments of the present invention, the output layer 2 may be densely connected to the last hidden layer 5b. In same or other embodiments, the output layer 2 may be configured as a "softmax" layer for generating output data which is interpretable as a measure of probability. Other non-limiting choices for a generating a predictive output datum y, in the absence of an output layer 2, may include support vector machines (SVMs), ridge regression, logistic regression, general mixture models or k-nearest neighbors. Hence, the generation of predictive output data may be implemented in various ways and is understood as being a final operation or transformation (e.g. a "top" layer) appended to the ordered sequence of hidden layers 3 for generating output data with predictive character based on the at least one hidden state vector $h^T$ received from the last hidden layer 5b. A predicted output datum y may be given as a multi-dimensional output vector. A predicted output datum y may be generated for a next time step in a plurality of time steps, e.g. in a time sequence (e.g. time series), or may be generated more than one time step ahead, e.g. at a particular time interval comprising more than one time step. A predicted output datum y, when generated may be used as input data for the recurrent neural network 16, e.g. it may be appended to or inserted into the sequence of input data X that is provided and applied to the input layer 1 or it may be directly fed back to the input layer 1 with or without an additional delay. This can provide a closed loop architecture for which the recurrent neural network 16 is free-running and continues generating output data y of a sequence of output data Y, which may be of advantage in data generating models.

It is noted that the received input data itself does not have to be binary-valued, but can be. If not already being presented to the input layer 1 in a binary-valued format, the items of the sequence of input data X are cast into such a format, e.g. by encoding each item/input datum $x^n$ as a one-hot vector (e.g. a vector with one of its components being set to '1', whereas all the remaining components are set to '-1'). In alternative embodiments of the invention, in which the received input data is directly applicable and received by the plurality of input connections, e.g. as outputs of an input data preprocessing neural network, e.g. an embedding layer, the so preprocessed input data may be binarized at the level of the output units/neurons of that preprocessing neural network, e.g. binarizing the preprocessed input data at the output neurons of the embedding layer, which are connected to the plurality of input connections.

The binarization of a non-binary representation (e.g. as a 32 bit floating point number) of an initial or a derived hidden state vectors h may be achieved by applying a sign-function to each if its vector components, as indicated in Eq. 1.

$$\text{bin}\left(h^n_j\right) = \text{sign}\left(h^n_j\right) = \begin{cases} -1, & \left|h^n_j\right| < 0 \\ 1, & \left|h^n_j\right| \geq 0 \end{cases}, j = 1, \dots, K_L \qquad (1)$$

Another example of a binarization function used for binarizing hidden states or input data, may be defined by a discrete probability distribution for randomly assigning '1' or '-1' as a value of the corresponding binarized hidden state or input datum, which are interpreted as a random variable. An exemplary discrete probability distribution may be given as a (binary) Bernoulli distribution for which the value '1' is assigned with probability 'p'. Connected weighted hidden states designates the ensemble of signal values provided at the hidden unit inputs 9, 10, 11 of the ordered sequence of hidden layers 3 by way of the plurality of hidden layer connections 12, 14a-b. Since binarized hidden state vectors are applied to the hidden unit outputs 13, the plurality of hidden layer connections 12, 14a-b also receive the binarized hidden states and respectively weigh them by their associated hidden layer weight $w_{hid}$. Naturally, a binarized hidden state vector may be applied to the hidden unit outputs 13 of a hidden layer by assigning its individual vector components (the individual hidden states comprising the hidden state vector) to separate hidden unit outputs, e.g. by identifying the j-th vector component with the j-th hidden unit output. Likewise, connected weighted input data refers to the ensemble of signal values provided at the hidden unit inputs 9, 10, 11 of the ordered sequence of hidden layers 3 by way of the plurality of input connections 15a-b. Since a binary-valued representation of a received input datum $x^n$ is applied to the input units 17 of the input layer 1, the plurality of input connections 15a-b also receive the binary-valued inputs $x^n_i$ and respectively weigh them by their associated hidden layer weight $w_{inp}$.

It is pointed out that for recurrent hidden layers, a derived hidden state or state vector h only becomes available at the hidden unit inputs of the same recurrent hidden layer or at the hidden unit inputs of a hidden layer preceding the same recurrent hidden layer in the ordered sequence with some delay, e.g. it takes at least one time step to propagate the derived hidden state or, in the present method, the (weighted) binarized version of the derived hidden state to the hidden unit inputs of the same recurrent hidden layer or to the hidden unit inputs of a hidden layer preceding the same recurrent hidden layer in the ordered sequence. Pushing forward the derived hidden state or, in the present method, the (weighted) binarized version of the derived hidden state to the hidden unit inputs of the next hidden layer in the ordered sequence may be accomplished within the same time step or within at least one time step (delay).. The delay with which the (binarized) derived hidden states become available may be larger than one time step, e.g. two or more time steps. The skilled person knows that in such cases the prediction method is only fully determined if initial conditions have been stated for the delayed (binarized) derived hidden states in the form of an initial hidden state vector h° for each hidden layer in the ordered sequence. For some embodiments of the present invention, a pre-determined default value, e.g. '-1' or '1', is assigned to each one of the initial states of the initial state vectors h°. In specific embodiments, the pre-determined default value may correspond to a learnt value, e.g. learnt during a training phase of the recurrent neural network 16. According to other embodiments, a randomly picked binary value, e.g. uniformly drawn from {-1; 1}, may be assigned to each one of the initial states of the initial state vectors h°. According to yet other embodiments, the most recent binarized hidden state value, e.g. obtained for the last time step of a previously received sequence of input data X, may be assigned to each one of the initial states of the initial state vectors h°.

Determining an input state $S^n_{,k}$ of an input state vector $S^n$ applicable to a hidden unit input 9, 10, 11 may proceed in a similar way as determining the activation $z_k$ in a conventional feedforward neural network, e.g. by summing all the weighted incoming signals $z_k = \sum_j w_{kj} x_j$. However, in the present method, not all the incoming signals at a hidden unit input are summed on an equal basis; a distinction is made between the incoming signals at the hidden unit input that are related to hidden layer connections and the incoming signals at the hidden unit input that are related to input connections. Hence, an input state $S^n_{,k}$ of an input state vector $S^n$ applicable to a hidden unit input 9, 10, 11 may be determined as indicated in Eq. 2, wherein the two weighting factors for the weighted sum, $\alpha_h$ and $\alpha_x$, may be pre-determined, e.g. trained, real numbers, which can depend on the particular input state vector (e.g. $\alpha_h = \alpha_{h,a}$ for $S^n_a$ and $\alpha_h = \alpha_{h,b}$ for $S^n_b$, idem for $\alpha_x$).

$$S^n_{,k} = \alpha_h \sum_j bin\left(h^{n-1}_j\right) w_{hid,kj} + \alpha_x \sum_i bin\left(x^n_i\right) w_{inp,ki} \qquad (2)$$

In embodiments of the invention, the determined input state applicable to each hidden unit input 9, 10a-c, 11, if not further modified or prior to being layer-normalized, may thus be obtained from a linear combination of weighted sums. These weighted sums may be computed as a matrix vector product of the binary-valued input weights and the binary-valued input data x on the one hand and of the binary-valued hidden layer weights and the binarized hidden states on the other hand. The weighted sums themselves are typically non-binary entities. A major advantage of using both binary-valued weights and binarized input data/hidden states resides in the fact that the corresponding weighted sums (e.g. matrix-vector products) are computable by pure summation of outcomes of logic functions, e.g. as sums of XNOR results, which avoids a large computational overhead due to multiplications, whereby computation energy is saved as compared to non-binary versions of the at least one recurrent hidden layer. This is of importance for instance for mobile applications on battery-driven portable devices. Indeed, there exists one-to-one correspondence between multiplications of members of the set {-1; 1} and XNOR operations performed on two digital values taken from the set {0; 1}. This correspondence may be exploited to implement the multiply-and-accumulate operations for obtaining the two weighted sums in Eq. 2 as a sum of XNOR results, wherein, in addition, a sum of XNOR results may be determined by carrying out a population count on either the 'ones' or the 'zeros' obtained from the XNOR operations. Another advantage of using binary-valued input weights and hidden layer weights is given by the reduced memory access latencies and storage capacities for binary-valued weights (e.g. memory storage capacity reduced by a factor of 32 in comparison to 32-bit full precision weights).

An individual modification by layer-normalizing may be achieved for each input state vector separately at each of the plurality of time steps, e.g. by first deriving a mean value and a maximum value as two characteristic statistical variables for the ensemble of input states comprised in each input state vector and then shifting and rescaling each input state vector in respect of its two characteristic statistical variables. Mathematically, this may be formulated as

$$S'^{n}_{a}(L) = LN\big(S^{n}_{a}(L)\big) = 3 \frac{S^{n}_{a}(L) - \underset{k\in\{1,\dots,K_L\}}{\text{mean}} S^{n}_{a,k}(L)}{\underset{k\in\{1,\dots,K_L\}}{\text{max}} S^{n}_{a,k}(L) - \underset{k\in\{1,\dots,K_L\}}{\text{mean}} S^{n}_{a,k}(L) + \varepsilon} \odot \gamma_a + \beta_a \qquad (3)$$

for any functional input state vector $S^{n}_{a}(L)$ of functionality 'a' in the L-th hidden layer at time step n. In this respect, the "max" and the "mean" operators are used to derive the statistical layer-normalization variables and the statistical ensemble represented by the input state vector $S^{n}_{a}(L)$ is given as the collection of its vector components $\{S^{n}_{a,k}(L)| \text{ k} = 1, \dots, K_L\}$. The epsilon in Eq. 3 may be a small real number introduced for numerical stability, e.g. $\varepsilon$=1E-5. Alternatively, one may derive a "mean" value and a standard deviation "std" value as two characteristic statistical variables for the ensemble of input states comprised in each input state vector and then shift and rescale each input state vector in respect of its these two characteristic statistical variables, e.g. mathematically stated in Eq. 4.

$$S'^{n}_{a}(L) = LN\big(S^{n}_{a}(L)\big) = \frac{S^{n}_{a}(L) - \underset{k\in\{1,\dots,K_L\}}{\text{mean}} S^{n}_{a,k}(L)}{\underset{k\in\{1,\dots,K_L\}}{\text{std}} S^{n}_{a,k}(L) + \varepsilon} \odot \gamma_a + \beta_a \qquad (4)$$

The epsilon in Eq. 4 may be a small real number introduced for numerical stability, e.g. $\varepsilon$=1E-5. Both in Eq. 3 and Eq. 4, there may be a set of adjustable parameters, e.g. a shift parameters $\beta_a$ and scaling parameters $\gamma_a$, values of which may be have been adjusted via training of the recurrent neural network 16. The shift parameters $\beta_a$ and scaling parameters $\gamma_a$ are organized as vectors and applied pointwise. As indicated they may depend on a particular input group. The adjustable parameters allow for the possibility of applying an identity map, meaning they may have the reverse effect and undo the individual modification of an input state vector if that has been proven efficient during a training phase of the recurrent neural network 16 prior to its use for prediction. It is observed that despite the resemblance with batch normalization typically applied to hidden layers of non-recurrent deep neural networks, the above described layer normalization formalism, which applies to input state vectors, is very different from the batch normalization formalism, because batch normalization depends on the averages and variability of activations determined over multiple inference passes. For embodiments of the present invention, however, layer-normalizing each input state vector is possible at each single time step, which may, in particular embodiments, coincide with a single inference pass. Moreover, the layer-normalization formalism is intrinsically dynamic and may individually modify input state vectors differently for each time step. Another particularity of layer-normalization resides in the fact that the represented ensemble for deriving statistical variables is related to the hidden units of a hidden layer and not to the collection of activations for a single hidden unit, which is the case for batch normalization. The layer-normalizing step applied to the input state vectors has the advantage of lowering the negative impact that the covariant shift introduced by the binarization step of the hidden states has on prediction and/or learning scores.

The individually modified determined input state vectors, e.g. $S'^{n}_{a}$, $S'^{n}_{b}$, and $S'^{n}_{c}$, when applied to the applicable hidden unit inputs 9, 10, 11, give rise, by virtue of the functional mappings F for each hidden layer, to a new derived hidden state vector $h^{n+1}$ for each hidden layer in the ordered sequence of hidden layers 3. Again, there exists a one-to-one correspondence between individually modified input state vectors, e.g. $S'^{n}_{a}$, $S'^{n}_{b}$, and $S'^{n}_{c}$, and the different input groups of the at least one recurrent hidden layer. Referring to FIG. 1, for instance, modified input state vector $S'^{n}_{a}$ is assigned to a first input group 10a of hidden unit inputs of the recurrent layer 4, modified input state vector $S'^{n}_{b}$ is assigned to a second input group 10b of hidden unit inputs of the recurrent layer 4 and modified input state vector $S'^{n}_{c}$ is assigned to a third input group 10c of hidden unit inputs of the recurrent layer 4.

A functional mapping F of at least one input state vector S onto a hidden state vector h may consist in functionally mapping at least one input state $S_k$ onto a hidden state $h_k$ for each hidden unit in a hidden layer, e.g. h = ($h_1$ ; $h_2$ ; ...; $h_{K(L)}$) = ($F_1(S_{,1})$ ; $F_2(S_{,2})$ ; ...; $F_{K(L)}(S_{,K(L)})$). Such functional mappings may be a linear, a non-linear function (e.g. a hyperbolic tangent, sigmoid function, rectified-linear function, etc.) or a composition thereof.

Hidden units may be simple hidden units including arithmetic processing means for deriving a hidden state as a function value of one or more input states applied at the hidden unit inputs. However, hidden units may also be provided as more complex processing blocks, which determine a plurality of intermediate function results and which may also comprise an internal memory or storing element for storing an internal state associated with the hidden unit during at least one time step in the plurality of time steps. Non-limiting examples of hidden units which are provided as more complex processing blocks may include long-term short memory units (LSTM) or gated recurrent units (GRU).

The plurality of input connections 15a-b may comprise input connections that are associated with a bias term, meaning a connection which is receiving a constant bias input for all the time steps in the plurality of time steps. A received input datum x can always be re-arranged to include a constant bias input.

According to some embodiments, a further optional step (step vii.) may be performed for each time step n in the plurality of time steps n = 0, 1, ..., t, t+1, ..., T-1 and comprises layer-normalizing also the new hidden state vector $h^{n+1}$ derived for the at least one recurrent hidden layer 4 (e.g. for all the hidden layers in the ordered sequence of hidden layers 3) prior to being binarized in the next time step n+1 (step ii.). As for the step dealing with layer-normalizing the determined input state vectors applicable to the different input groups 10a-c at least the at least one recurrent hidden layer 4 (step iv.), layer-normalizing the derived new hidden state vector(s) $h^{n+1}$ is based on further layer-normalization variables for the new hidden state vector(s) $h^{n+1}$. These further layer-normalization variables are time-dependent statistical variables derived from at least part of the ensemble of represented hidden states. The same mathematical treatment as for the input state vectors described before, in particular in relation to Eq. 3 and Eq. 4, may be applied to the optional layer-normalizing step (step vii.) for the one or more derived, not yet binarized, new hidden state vector(s) $h^{n+1}$.

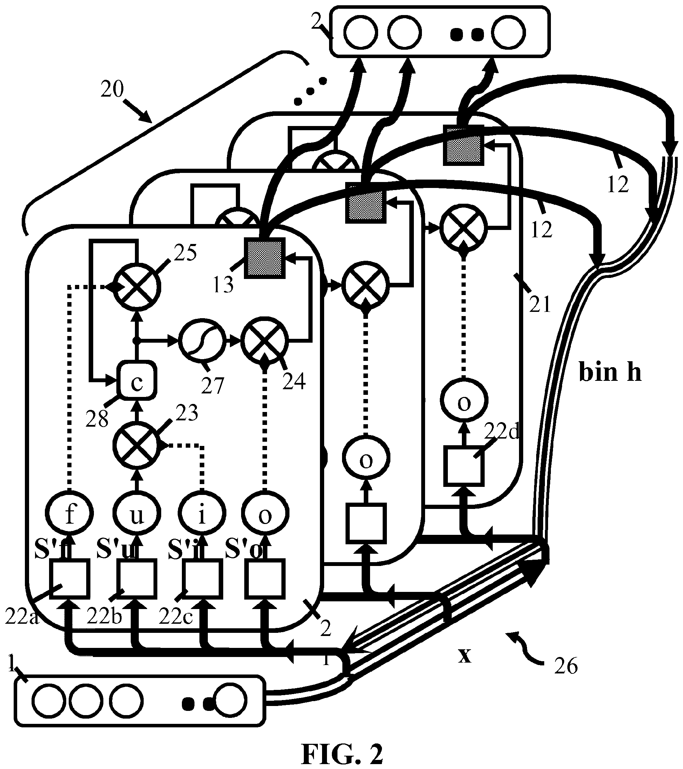

Referring now to FIG. 2, a recurrent neural network 26 is shown which may be provided in a prediction method according to the invention. The recurrent neural network 26 comprises an input layer 1, an output layer 2 and a single recurrent hidden layer 20. For this particular embodiment, the ordered sequence of hidden layers thus contains only a single hidden layer 20. The recurrent hidden layer 20 comprises a plurality of hidden units, which in this specific embodiment are provided or instantiated as a plurality of hidden long-term short memory (LSTM) cells 21, e.g. tens, hundreds, or thousands of hidden LSTM cells 21. A typical LSTM cell 21 comprises four hidden unit inputs 22a-d, each being connected to the input layer 1 by a plurality of input connections, having associated therewith a binary-valued input weight, for receiving weighted input data x. Additionally, the four hidden unit inputs 22a-d of each hidden LSTM cell are also connected to the hidden unit outputs 13 by a plurality of (recurrent) hidden layer connections 12, each being associated with a binary-valued hidden layer weight, for receiving the binarized hidden states bin(h), which are denoted "bin h" in FIG. 2. The hidden unit inputs of the hidden LSTM cells 21 in the hidden recurrent layer 20 are logically organized into four corresponding input groups, also designated 22a-d, and each input group is addressed by a distinct input state vector, e.g. all first hidden unit inputs 22a are organized into a first input group 22a expecting input to be delivered by way of a first input state vector $S_a$, all second hidden unit inputs 22b are organized into a second input group 22b expecting input to be delivered by way of a second input state vector $S_b$, and so forth. The different input groups are distinguished by their particular role in deriving a new hidden state vector h based on the applicable input state vectors, e.g. via a function F. More specifically, three of the four different hidden unit inputs, 22a, 22b and 22d in FIG. 2, are each dedicated to the control of a particular functional gate. For example, each hidden LSTM cell 21 may comprise an input gate 23, an output gate 24 and a forget gate 25, which are respectively controlled by a first mapping 'i' having a first modified input state $S'_i$ as input argument, a second mapping 'o' having a second modified input state $S'_o$ as input argument and a third mapping 'f' having a third modified input state $S'_f$ as input argument (ignoring additional indices for S for referring to a particular hidden LSTM cell). In contrast thereto, the fourth group of hidden unit inputs 22c is dedicated to incoming signals of the controlled input gates 23. For instance, each hidden LSTM cell 21 may generate the incoming signal at the input gate 23 as a result of a fourth mapping 'u' having the fourth modified input state $S'_u$ as input argument. The modified input state vectors S' are obtained from the underlying determined input state vectors S applicable to the hidden unit inputs 22a-d via a layer-normalizing step, e.g. by evaluating the mathematical expressions indicated in Eq. 3 or in Eq. 4. Hence, input state vectors S are individually modified for the recurrent hidden layer 20. A separate input state $S_{q,k}$ is determined for each hidden unit input 22a-d of a hidden LSTM cell 21 and corresponds to a vector component of the determined input state vector $S_q$.

For the present embodiment, the hidden units, e.g. the hidden LSTM cells 21, are provided as more complex processing blocks, for which the four mappings 'i', 'o', 'f' and 'u' yield intermediate functional results. Another particularity of the hidden LSTM cell 21 resides in the provision of a memory element 28 in each hidden LSTM cell 21 for storing a cell state $c_k$, or, in other words, for storing a corresponding cell state vector c for the recurrent hidden layer 20 as a whole. This enables the LSTM cells 21 of the layer 20 to remember previous information over longer period of times, e.g. until the next time step or over many next time steps in a plurality of time steps. A linearly mapped (through the action of the forget gate 25) version of the current cell state vector $c^n$ is determining the next cell state $c^{n+1}$ in a sequence of time steps when the recurrent neural network 26 is running. This delayed self-feedback from a cell state onto itself thus constitutes a (long short-term) memory element for each LSTM cell 21, which renders LSTM layers 20 so attractive and powerful in the field of recurrent neural networks.

The input gate 23, output gate 24 and forget gate 25 for each hidden LSTM cell 21 may be a multiplicative gate for which an input signal at the gate is multiplied by a control signal. Taking the input gate 23 as an example, an intermediate result 'I' of the first (input) mapping 'i' provides the control signal to the input gate 23 and thereby determines, by multiplication, the portion of an intermediate result 'U' of the fourth (update) mapping 'u' to be used to update the cell state $c^n$. Hence, a cell state c is adapted to accept new relevant input information, wherein the relevance is controlled by the input gate 23. At the same time the cell state c is adapted to forget, in a next time step, its currently retained information, which may be achieved by the forget gate 25. A complete functional mapping of the input state vectors onto the derived, new hidden state vector for the recurrent layer 20 is proposed, in vector notation, in Eq. 5a, 5b, wherein the multiplicative action of the gates 23, 24, 25 is performed pointwise, $W_{(q)}$ is a matrix obtained from a larger concatenated weight matrix W, comprising all the input weights and all the hidden layer weights, by masking matrix entries which are not associated with connections (input connections and hidden layer connections) for the q-th hidden input unit, and "LN" designates the layer-normalizing step for the determined input state vectors, e.g. as stated in Eq. 3 or Eq. 4. In Eq. 5a and 5b, the vector variables "F" and "O" are control variables for the forget gate 25 and the output gate 24, respectively, and correspond to intermediate results of the third mapping 'f' and the second mapping 'o'. The signal applied to the output gate 24 may be a mapping 27 of the current cell state, e.g. the hyperbolic tangent (tanh) transformation in Eq. 5b operating point-wise on the current cell state vector $c^n$ of the recurrent hidden layer 20. A controlled output signal of the output gate 24 is representing the new hidden state $h_k{}^n$ derived for each hidden LSTM cell 21 'k'. It is delivered to the hidden unit output 13 of the hidden LSTM cell 21.

$$I^n = i(S'^n_i) = \sigma\left(LN\big(W_{(i)}[x^n;\ bin(h^{n-1})]\big)\right)$$
$$O^n = o(S'^n_o) = \sigma\left(LN\big(W_{(o)}[x^n;\ bin(h^{n-1})]\big)\right)$$
$$F^n = f(S'^n_f) = \sigma\left(LN\big(W_{(f)}[x^n;\ bin(h^{n-1})]\big)\right) \qquad (5a)$$
$$U^n = u(S'^n_u) = tanh\left(LN\big(W_{(u)}[x^n;\ bin(h^{n-1})]\big)\right)$$

$$S'^n_q = LN\big(S^n_q\big); \mathrm{q} = \{\mathrm{i, o, u, f}\}$$
$$c^n = F^n \odot c^{n-1} + I^n \odot U^n \qquad (5b)$$
$$h^n = O^n \odot tanh(c^n)$$

The first, second and third mappings (e.g. 'i', 'o', 'f') are typically sigmoid functions for which a mapped intermediate scalar result is comprised in the range [0, 1]. Therefore, the corresponding gates 23, 24, 25 act like controlled valves which let pass an adjustable fraction of the applied signals. The fourth mapping 'u' may be a hyperbolic tangent (tanh), which is suitable for producing both positive and negative values for the intermediate result "U" corresponding to a cell update state. Interconnecting the hidden unit outputs 13 of the LSTM cells 21 to the plurality of hidden unit inputs 22a-d by a plurality of (recurrent) hidden layer weights 12 may quickly lead to a large amount of weights to be stored and retrieved during each inference pass, e.g. on the order of millions of weights. Therefore, dealing with binary-valued weights is greatly reducing the required storage capacity and the data transfer rate requirements for a processing device using any of the described inventive methods.

In same or alternative embodiments a momentarily modified cell state vector is obtained by layer-normalizing the current cell state vector $c^n$ in respect of statistical layer-normalization variables obtained of the ensemble of all represented cell states, e.g. by layer-normalizing according to Eq. 3 or Eq. 4. In such embodiments, the mapping 27 applies to the momentarily modified cell state vector, i.e. the layer-normalized cell state vector. This means that the last line in Eq. 5b has to be changed accordingly, as in Eq. 6. It is noted that, in contrast to the cell state vector, the momentarily modified cell state vector does not need to be stored over one or more subsequent time steps and may be discarded (e.g. erased) immediately after the mapping 27 has been applied thereto.

$$h^n = O^n \odot tanh\big(LN(c^n)\big) \qquad (6)$$

In yet alternative embodiments, additional peephole connections between the memory element 28 storing the cell state and the hidden unit inputs 22a-d may be included for each hidden LSTM cell 21. These additional peephole connections convey information on the currently stored cell state to the hidden unit inputs. They may be delayed and the corresponding peephole weights may also be binary-valued. In such cases, the input state vectors for the at least one recurrent hidden layer may comprise additional contributions to the linear combination, different from the connected weighted inputs and the connected weighted hidden states, e.g. the additional contributions may be connected weighted cell states.

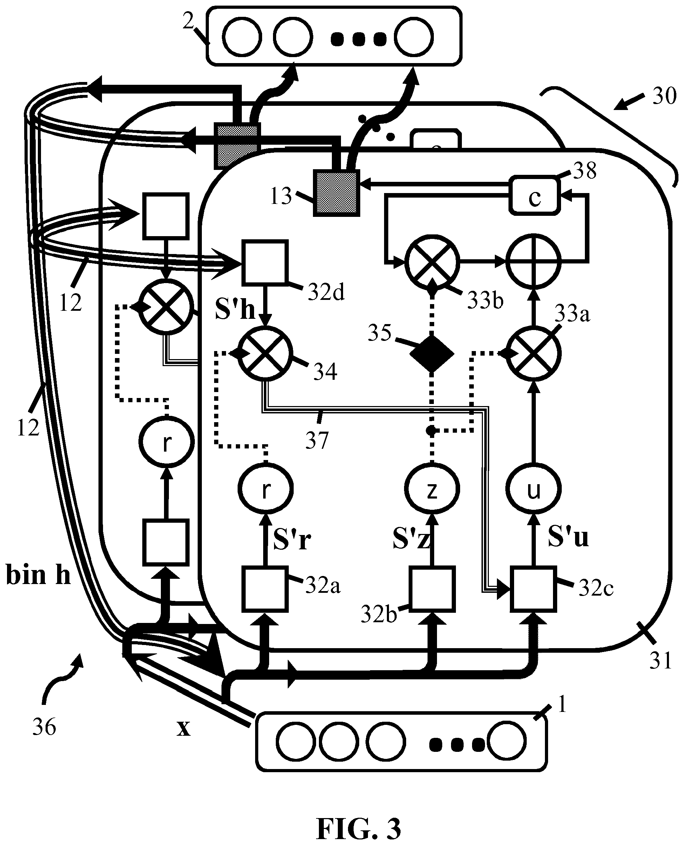

Referring to FIG. 3, a recurrent neural network 36 for use in a different embodiment is shown. This recurrent neural network 36 comprises an input layer 1, an output layer 2 and a single hidden "gated recurrent unit (GRU)" layer 30. The recurrent hidden GRU layer 30 comprises a plurality of gated-recurrent hidden units 31, wherein a number of gated-recurrent hidden units 31 may be on the order of tens, hundreds, thousands, or more. A typical gated-recurrent hidden unit 31 comprises four hidden unit inputs 32a-d, three of which (e.g. 32a-c) are connected to the input layer 1 by a plurality of input connections, having associated therewith a binary-valued input weight, for receiving weighted input data x. Additionally, the four hidden unit inputs 32a-d of each gated-recurrent hidden unit 31 are also connected to the hidden unit outputs 13 by a plurality of (recurrent) hidden layer connections 12, each being associated with a binary-valued hidden layer weight (e.g. the binary-valued hidden layer weights $W_r$, $W_z$, $W_h$ and $W_u$, organized into weight matrices with binary-valued entries), for receiving the binarized hidden states bin(h), which are denoted "bin h" in FIG. 3. The hidden unit inputs 32a-d of the plurality of gated-recurrent hidden units 31 in the hidden recurrent GRU layer 30 are logically organized into four corresponding input groups, also designated 32a-d, and each input group is addressed by a distinct input state vector, e.g. all first hidden unit inputs 32a are organized into a first input group 32a expecting input to be delivered by way of a first input state vector $S_a$, all second hidden unit inputs 32b are organized into a second input group 32b expecting input to be delivered by way of a second input state vector $S_b$, and so forth. The different input groups are distinguished by their particular role in deriving a new hidden state vector h based on the applicable input state vectors, e.g. via a function F. More specifically, two of the four different hidden unit inputs, 32a and 32b in FIG. 3, are each dedicated to the control of a particular functional gate, e.g. a multiplicative gate. For example, each gated-recurrent hidden unit 31 may comprise a reset gate 34 and update gates 33a-b, which are respectively controlled by the intermediate result "R" of a first (reset) mapping 'r', having a first modified input state $S'_r$ as input argument, and by the intermediate result "Z" of a second mapping 'z', having a second modified input state $S'_z$ as input argument. Here, the control variable "Z" directly controls one of the update gates, e.g. update gate 33a in FIG. 3, whereas a one complement "1-Z", determined by an inverting component 35 of the gated-recurrent hidden unit 31, is used as control variable of the other update gate, e.g. update gate 33b in FIG. 3. A controlled signal that is applied to the update gate 33a is obtained as an intermediate result "U" of a third mapping 'u', having a third modified input state $S'_u$ as input argument. Typically, the group of hidden unit inputs 32c dealing with the third mapping 'u' is configured for not receiving the binarized hidden states directly, e.g. by not having any hidden layer connection 12 provided to these hidden unit inputs. The reason for this is that this group of hidden unit inputs 32c is receiving information on the binarized hidden states via a distinguished type of connections, i.e. via a plurality of intra-unit connections 37, each of which is typically associated with a unit intra-unit weight, e.g. having an associated intra-unit weight $w_{intra} = 1$, meaning that for these embodiments the intra-unit weights are invariable and do not need to be stored, further reducing the memory requirements and the computational cost. Each of the plurality of intra-unit connections 37 originates at the output of a reset gate 34, to which it is connected at one end (the other end being connected to a hidden unit input of the input group 32c).

The modified input state vectors S' are obtained from the underlying determined input state vectors S applicable to the hidden unit inputs 32a-d via a layer-normalizing step, e.g. by evaluating the mathematical expressions indicated in Eq. 3 or in Eq. 4. Hence, input state vectors S are individually modified for the recurrent hidden layer 30. For the present embodiment, determining an input state vector $S_u$ applicable to hidden unit input group 32c comprises determining an input state vector $S_u$ as a linear combination of the computed first and computed second sum, wherein a weighting factor of the linear combination with respect to the computed first sum (i.e. sum of connected weighted hidden states) may be a provided as the intermediate result "R" of the first (reset) mapping 'r', which is multiplying the sum of connected weighted modified input states associated with the fourth input group 32d, e.g. one part of the linear combination determining an input state of an input state vector $S_u$ applicable to hidden unit input group 32c may be of the form $R \odot S'_h = R \odot LN(W_{(h)}bin(LN(h^{n-1})))$.

For the present embodiment, the hidden units, e.g. the hidden gated-recurrent hidden units 31, are provided as more complex processing blocks, for which the three mappings 'r', 'z' and 'u' yield intermediate functional results. These three mappings 'r', 'z' and 'u' may also receive a constant bias input $b_r$, $b_z$ and $b_u$. Another particularity of the hidden gated-recurrent hidden units 31 resides in the provision of a memory element 38 in each hidden gated-recurrent hidden units 31 for storing a cell state $c_k$, or, in other words, for storing a corresponding cell state vector c for the recurrent hidden GRU layer 30 as a whole. This enables the gated-recurrent hidden units 31 of the layer 20 to remember previous information over longer period of times, e.g. until the next time step or over many next time steps in a plurality of time steps. A linearly mapped (through the action of the update gates 33a, 33b) version of the current cell state vector $c^n$ is determining the next cell state $c^{n+1}$ in a sequence of time steps when the recurrent neural network 36 is running. The computation of a momentarily modified cell state vector, obtained from the current cell state vector related to the hidden GRU layer 30 in FIG. 3 via layer-normalization, is generally skipped, because the layer-normalizing can be directly applied to the new hidden states, when derived, prior to being binarized.

On possible mapping of applicable modified input state vectors S' to the new hidden state vector h to be derived is stated in Eq. 7 for embodiments referring to FIG. 3. A cell state $c^n$ may be determined in full-precision, whereas the derived new hidden state vector $h^n$ is binarized or layer-normalized and binarized hereafter, e.g. when entering the three mappings 'r', 'z' and 'u' in the next time step.

$$R^n = r(S_r'^n) = \sigma\left(LN\left(W_{(r)}\left[x^n;\ bin\left(LN(h^{n-1})\right)\right]\right)\right)$$

$$Z^n = z(S_z'^n) = \sigma\left(LN\left(W_{(z)}\left[x^n;\ bin\left(LN(h^{n-1})\right)\right]\right)\right)$$

$$U^n = u(S_u'^n) = tanh\left(LN\left(W_{(u)}x^n + R^n \odot S_h'^n\right)\right) \tag{7}$$

$$c^n = (I - Z^n) \odot c^{n-1} + Z^n \odot U^n$$

$$h^n = c^n$$

The embodiment relating to the recurrent neural network 36 in FIG. 3 is a more 'lightweight' version of the recurrent neural network 26 of the previous embodiment discussed in relation with FIG. 2, because it only involves two control signals acting on three gates of each hidden gated-recurrent unit 31 and also limits the number of hidden layer weights and input weights by omitting the output gate in each hidden unit together with its dedicated hidden unit input. Therefore, the at least one hidden layer being a GRU layer 30 may be of advantage for even lower storage capacities for weights and, in addition thereto, for a reduced number of mappings (e.g. the three mappings 'r', 'z' and 'u') that need to be carried out at every time step when the recurrent neural network is running. In consequence, less arithmetic operations are required in an inference pass, which speeds up calculations.

The present invention also relates to a training method for training at least the binary-valued weights used for any of the prediction methods according to the first aspect. This means that the binary-valued input weights and hidden layer weights of the recurrent neural network may be obtained by training during a training phase. The training method is providing a training set of adequate sample size for supervised learning of weights. A training set comprises a sequence of input data X and a corresponding sequence of target output data T, which may be labelled data or ground truth data. In addition, a corresponding adjustable weight is provided for each binary-valued weight of the recurrent neural network and is associated with the same connection as the binary-valued weight when carrying out the steps of the prediction method. That is each binary-valued weight is paired with a partner weight during training, the partner weight being adjustable during training. Such an adjustable partner weight may be a full-precision weight. Furthermore, adjustable weights are initialized, e.g. to zero or according to a Gaussian normal distribution. Thereafter at least one training pass is executed, during which:

- the steps of the prediction method are performed, using at least a sub-sequence of input data of the training set as input data for the input layer and using the corresponding adjustable weights subject to a binarization function as the binary-valued weights associated with input connections and hidden layer connections of the recurrent neural network,
- a contribution to a cost function is determined, based on a deviation of at least one predictive output datum, generated at the output layer, from at least one corresponding target output datum of the training set,
- updating the adjustable weights such that the updated adjustable weights reduce the contribution to the cost function.

At the end of the at least one training pass, each one of the updated adjustable weights obtained during the most recent training pass is binarized, the result thereof is used for the corresponding trained binary-valued weight.

A backpropagation through time (BPTT) training algorithm may be used if the recurrent neural network under training is unrolled in time. A cost function may be optimized using the Adam optimizer, the Ada optimizer or any other available optimizer suitable for training.

Gradient clipping may be implemented to avoid too large gradient contributions, which shift the updated adjustable weights out of a meaningful range, e.g. the range in which the binarization method is critically defined, e.g. a range defined around the input thresholds of the sign-function. Additionally, the learning rate, which is used for updating the adjustable weights with scaled gradients, may be decayed over time as the training algorithm progresses. In particular embodiments using hidden LSTM cells, the training algorithms may be modified to include zone-out with a probability p for the cell states, e.g. p = 0.1. Zone-out randomly selects between the possibilities of updating, with a probability 1-p, a cell state according to an update rule, e.g. as given in Eq. 5b, or of not updating, with a probability p, a cell state. For the latter case, the cell state is maintained in its current state, e.g. $c^{n+1} = c^n$.

In alternative embodiments of the invention, the weights of the recurrent artificial neural network may be trained by reinforcement learning. Connectionist temporal classification scores may be used for training the weights of the recurrent neural network.

A deviation contributing to a cost function may be determined through a 0-1-loss function, e.g. telling apart incorrectly predicted output data from correctly predicted output data. If a predictive output datum is not concerned with predicting a label or a label representation (e.g. one-hot vector), a deviation may also measure an orientation and/or distance of an output datum feature vector with respect to a target vector. A cost function for the recurrent neural network may be provided as a cross-entropy cost.

In embodiments of the present invention, the adjustable weights are subject to a binarization function during each training pass and at the end of the training phase to produce the (trained) binary-valued weights for the recurrent neural network. This binarization function may have the only two possible states $\{-\alpha,+\alpha\}$ as outcomes, wherein a scaling parameter "$\alpha$" may be a predetermined value, e.g. 'one', or may be learnt during the training phase of the recurrent neural network and fixed thereafter. All the hidden layer weights and input weights may share a common scaling parameter $\alpha_{shared}$. Alternatively, the hidden layer may have a common scaling parameter $\alpha_{hid}$, whereas the input weights may have a common scaling parameter $\alpha_{inp}$, different from $\alpha_w$. Furthermore, it is possible to assign a different scaling parameter to each group of weights associated with connections to a specific input group.

The binarization function for the adjustable weights may be realized during the forward and backward pass, when training the recurrent neural network, e.g. by applying a sign-function, as indicated in Eq. 8.

$$\text{bin}(w, \alpha) = \alpha \cdot \text{sig}(w) = \begin{cases} -\alpha, |w| < 0 \\ \alpha, |w| \geq 0 \end{cases} \tag{8}$$

Straight-through estimators may be used for estimating the gradient relating to the sign-function.

EXEMPLE 1

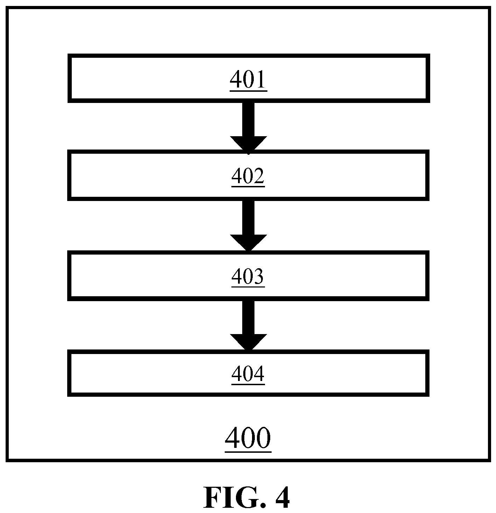

FIG. 4 shows a block diagram for a recurrent neural network 400 in accordance with embodiments of the present invention. It comprises a first and a second LSTM layer 401, 402 as two hidden recurrent layers in the ordered sequence of hidden layers (the input layer is not shown in FIG. 4). The hidden unit outputs of the first LSTM layer 401 are connected, via a set of hidden layer connections having binary-valued hidden layer weights associated therewith, to the hidden unit inputs of the second LSTM layer 402. The hidden unit outputs of the second LSTM layer 402 are connected, via another set of hidden layer connections having binary-valued hidden layer weights associated therewith, to the hidden unit inputs of a fully connected, non-recurrent hidden layer 403 also comprised by the ordered sequence of hidden layers. The hidden unit outputs of the fully connected, non-recurrent hidden layer 403 are connected, via a set of output layer connections having non-binary (e.g. full precision) output layer weights associated therewith, to a "softmax"-type output layer 404.

The fully connected, non-recurrent hidden layer 403 may be trained using batch-normalization techniques. Hidden units of the hidden layer 403 may be implemented with ReLU activation functions as functional mappings.

Evaluating the performance of the recurrent neural network 400 on the *"War and Peace"* language dataset for predicting next words in a sequence of words, e.g. using sequence lengths comprising 100 words and a vocabulary size of 87, a testing score of 1,190 was obtained after 600 training passes (epochs), using the cross-entropy metric and 1024 hidden LSTM cells in each hidden LSTM layer 401, 402. In comparison thereto, a model consisting of two LSTM hidden layers (having 1024 hidden LSTM cells in each LSTM layer) and a non-recurrent, fully-connected layer which does not implement binary-valued weights, merely achieved a testing cross-entropy score of 1,226. A testing score of 1,23 was obtained after 600 training passes (epochs), using the cross-entropy metric and 512 hidden LSTM cells in each hidden LSTM layer 401, 402.

The particular embodiment related to FIG. 4 may also be applied to other natural language processing task, such as the Penn Treebank dataset (a parsed text corpus), for which a testing cross-entropy of 1,00 was found.

EXEMPLE 2

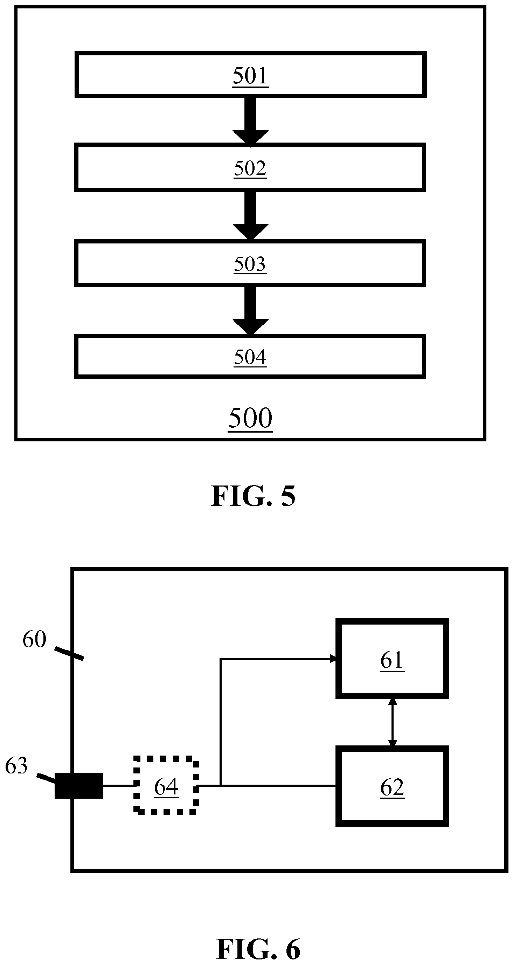

FIG. 5 shows a block diagram for a recurrent neural network 500 in accordance with embodiments of the present invention. It comprises a first and a second GRU layer 501, 502 as two hidden recurrent layers in the ordered sequence of hidden layers (the input layer is not shown in FIG. 5). The hidden unit outputs of the first GRU layer 501 are connected, via a set of hidden layer connections having binary-valued hidden layer weights associated therewith, to the hidden unit inputs of the second GRU layer 502. The hidden unit outputs of the second GRU layer 502 are connected, via another set of hidden layer connections having binary-valued hidden layer weights associated therewith, to the hidden unit inputs of a fully connected, non-recurrent hidden layer 503 also comprised by the ordered sequence of hidden layers. The hidden unit outputs of the fully connected, non-recurrent hidden layer 503 are connected, via a set of output layer connections having non-binary (e.g. full precision) output layer weights associated therewith, to a "softmax"-type output layer 504.

The fully connected, non-recurrent hidden layer 503 may be trained using batch-normalization techniques. Hidden units of the hidden layer 503 may be implemented with ReLU activation functions as functional mappings.

Evaluating the performance of the recurrent neural network 500 on the *"War and Peace"* language dataset for predicting next words in a sequence of words, e.g. using sequence lengths comprising 100 words and a vocabulary size of 87, a testing score of 1,231 was obtained after 600 training passes (epochs), using the cross-entropy metric and 1024 hidden GRU units in each hidden GRU layer 501, 502. A testing score of 1,259 was obtained after 600 training passes (epochs), using the cross-entropy metric and 512 hidden GRU units in each hidden GRU layer 501, 502.

In a further aspect, the invention relates to a data processing device comprising means for carrying out the steps of any of the claimed prediction methods. A processing device may comprise a memory unit for storing and retrieving the binary-valued weights of the recurrent neural network. Means for carrying out the steps of the prediction method may comprise an arithmetic processing unit for performing a plurality of binary XNOR operations on pairs of single bits and for performing population count operations on results obtained from the plurality of binary XNOR operations.

FIG. 6 shows schematically a data processing device 60 comprising an I/O connector 63 for receiving input data or weights of the recurrent neural network. An optional input argument checking unit 64 may verify that the received input data or weights are binary-valued and if this is not the case, may apply a binarization function to the received signal, e.g. a sign-function. The received weights are sent to and stored in a memory unit 61, e.g. on on-chip or off-chip SRAM or non-volatile memory. Input data for an inference pass is processed by an arithmetic processing unit 62, which is also connected to the memory unit 61 for retrieving therefrom the stored binary-valued weights. The arithmetic processing unit 62 may send intermediate results for storage back to the memory unit 61, e.g. binarized hidden state vectors for the running recurrent neural network model. A generated predictive output datum may be delivered back to the I/O connector 63. The arithmetic processing unit 62 may be adapted for operating as a low-power hardware module, e.g. by avoiding the implementation of a large number of multiply-and-accumulate (MAC) functional blocks and rather using the available chip area for massively parallel XNOR gates and popcount circuits. XNOR gates and popcount circuits are involved in computing the weights sums for the input state vectors of the recurrent neural network. Due to the large number of neural network connections, the computational power requirements are largely dominated by the calculation of weighted sums. Therefore, a combination of XNOR gates and popcount circuits replacing chip area-intensive and power-intensive multiplier circuits in conventional MAC units is beneficial. The data processing device 60 may also be used as co-processor dealing only with the binarized versions of the matrix-vector products and communicate the result back to an external control unit or main processor for further data processing related to the recurrent neural network model.

It is an advantage of embodiments of the invention that the memory unit may be very compact and of low memory capacity, because all the sored weights are binary-valued.

In yet a further aspect, the invention relates to a computer program product and a computer-readable data carrier which include instructions which, when the program is executed by a computer, perform the steps of any of the claimed prediction methods and/or any of the claimed training methods.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented prediction method using recurrent neural networks, the method comprising:

   - providing a sequence of input data (X) applicable to a plurality of input connections (15a-b),
   - providing an ordered sequence of hidden layers (3), wherein a first and a last hidden layer (5a, 5b), respectively, refer to the first and the last hidden layer in said ordered sequence of hidden layers, the ordered sequence of hidden layers comprising at least one recurrent hidden layer (4), each hidden layer comprising a plurality of hidden units (6, 7, 8), each hidden unit comprising a hidden unit output (13) and a pre-determined number of hidden unit inputs (9, 10, 11), the hidden units of each hidden layer being adapted for deriving a hidden state vector (h) from at least one input state vector (S) applicable to the hidden unit inputs of that hidden layer, each vector component of a state vector (h, S) representing the state at a different hidden unit of the same hidden layer, the hidden unit inputs (9, 10, 11) of each hidden layer further being logically organized, depending on their respective functionality in the hidden units (6, 7, 8), into input groups (10a-c) such that a different input state vector is applicable to each input group,

- providing a plurality of hidden layer connections (12, 14a-b) connecting the hidden unit outputs (13) of each hidden layer (4, 5a, 5b) to the hidden unit inputs (10a, 10c, 11) of the hidden layer being next in the ordered sequence (3) and, if that hidden layer is one of the at least one recurrent hidden layer (4), also to the hidden unit inputs (10a-c) of that same recurrent hidden layer (4) and/or to the hidden unit inputs of a hidden layer preceding that same recurrent hidden layer in the ordered sequence (3), each hidden layer connection having an associated binary-valued hidden layer weight,

- providing a plurality of input connections (15a-b) connected to the hidden unit inputs (9, 10) of at least the first hidden layer (5a), each input connection (15a-b) being associated with a binary-valued input weight,

- performing the following steps for each of a plurality of time steps:

  ○ binarizing in each hidden layer an initial hidden state vector ($h^\circ$) at a first time step and a derived hidden state vector ($h^n$) at each subsequent time step (n) in the plurality of time steps, and applying the result to the hidden unit outputs (13) of that hidden layer for obtaining connected hidden states weighted by hidden layer weights,

  ○ applying a binary-valued vector representation of a next input datum (x) of the sequence of input data (X) to the input connections (15a-b) for obtaining connected input data weighted by input weights,

  ○ computing, for each hidden unit input (9, 10, 11), a first sum of connected weighted hidden states and a second sum of connected weighted input data, and determining an input state of an input state vector applicable to that hidden unit input as a linear combination of the computed first and computed second sum,

  ○ individually modifying, at least for the at least one recurrent hidden layer (4), the determined input state vectors (S) applicable to the different input groups (10a-c), wherein individually modifying a determined input state vector for a hidden layer includes layer-normalizing the input state vector based on time-dependent statistical layer-normalization variables derived from at least a part of the ensemble of input states represented by the input state vector,

  ○ applying the determined input state vectors or, if modified, the individually modified determined input state vectors (S') substituting the determined input state vectors, to the applicable hidden unit inputs (9, 10, 11), and

  ○ deriving a new hidden state vector ($h^{n+1}$) for each hidden layer to be used for the next time step,

- applying the new hidden state vector ($h^T$) derived for the last hidden layer (5b) to the hidden unit outputs (13) of the last hidden layer (5b) for at least a last time step in the plurality of time steps, and

- generating a predictive output datum, based on the at least one hidden state vector (h) applied to the hidden unit outputs (13) of the last hidden layer (5b).

**2.** A prediction method according to claim 1, further comprising layer-normalizing, for each time step in the plurality of time steps, the derived hidden state vector for the at least one recurrent hidden layer (4) based on further layer-normalization variables and prior to being binarized in the same time step or the next time step, the further layer-normalization variables for the new hidden state vector (h) being time-dependent statistical variables derived from at least a part of the ensemble of represented hidden states.

**3.** A prediction method according to claim 1 or 2, further comprising the step of applying at least one adjustable shift parameter and/or at least one adjustable scaling parameter to a layer-normalized input state vector, when individually modifying that determined input state vector for each of the plurality of time steps, for shifting and/or scaling that layer-normalized input state vector.

**4.** A prediction method according to any one of the previous claims, wherein hidden state vectors (h) are binarized by applying a binarization function to each of its vector components.

**5.** A prediction method according to any one of the previous claims, wherein first sums and/or second sums are computed by performing a bitwise XNOR operation, followed by a population count.

6. A prediction method according to any one of the previous claims, wherein the ordered sequence of hidden layers (3) comprises at least two subsequent recurrent hidden layers and/or a recurrent hidden layer followed by a non-recurrent hidden layer comprising a plurality of hidden units, the non-recurrent hidden layer being the last hidden layer (5b) of the ordered sequence (3).

7. A prediction method according to any one of the previous claims, wherein the statistical layer-normalization variables for layer-normalizing a state vector are derived from at least a part of the ensemble of represented states by computing a maximum value and a mean value of said ensemble, or by computing a standard deviation value and a mean value of said ensemble.

8. A prediction method according to any one of the previous claims, further comprising the step of providing an output layer (2), the output layer comprising at least one output unit (18) for generating the predictive output datum by applying an activation function to a plurality of sums of weighted connected new hidden states of the last hidden layer (5b).

9. A prediction method according to any one of the previous claims, wherein the at least one recurrent hidden layer (4) is provided as a long-term short-memory (LSTM) layer (20), wherein each of the plurality of hidden units (21) further comprises:

- an storage element (28) for storing an updated cell state (c) during each time step,
- a forget gate (25) for controlling, via an intermediate result of a third mapping (f), a contribution of a previously stored cell state to the updated cell state (c),
- an input gate (23) for controlling, via an intermediate result of a first mapping (i), a contribution of an intermediate result of a fourth mapping (u) to the updated cell state (c), and
- an output gate (24) for controlling, via an intermediate result of a second mapping (o), a component of the new hidden state vector (h),

and wherein, for each of the plurality of time steps, deriving a new hidden state vector (h) for the long-term short-memory layer (20) comprises:

- deriving the intermediate results of the first, second, third and fourth mappings (i, o, f, u) of the long-term short-memory layer (20) from the different modified input state vectors ($S'_f$, $S'_i$, $S'_o$, $S'_u$) applicable to the corresponding input group (22a-d),
- updating cell states to be stored, using the contributions of the previously stored cell states and the intermediate result of the fourth mapping (u) respectively available at the forget gates (25) and the input gates (23),

  ○ obtaining momentarily modified updated cell states by layer-normalizing the corresponding updated cell state vector, based on further time-dependent statistical layer-normalization variables derived from the ensemble of updated cell states represented by the updated cell state vector,

- determining activations by applying an activation function (27) to the momentarily modified updated cell states, and
- scaling the determined activations at the output gates (24), the scaled determined activations being assigned to the components of the new hidden state vector (h) derived at the hidden unit outputs (13) of the long-term short-memory layer (20).

10. A prediction method according to any one of the claims 1 to 8, wherein the at least one recurrent hidden layer (4) is provided as gated recurrent unit (GRU) layer (30), each of the plurality of hidden units (31) of the gated recurrent unit layer (30) further comprising

- a storage element (38) for storing an updated cell state (c) during each time step,
- update gates (33a-b) for controlling, via an intermediate result of a second mapping (z), contributions of a previously stored cell state ($c^{n-1}$) and an intermediate result of a third mapping (u) to the updated cell state ($c^n$),
- a reset gate (34) for controlling, via an intermediate result of a first mapping (r), a scaling of a component of a modified input state vector ($S'_h$),
- an intra-unit connection (37) connecting an output of the reset gate (34) to the hidden unit input of an input group (32c) of the gated recurrent unit layer (30), and

wherein, for each of the plurality of time steps, deriving a new hidden state vector (h) for the gated recurrent unit layer (30) comprises:

- scaling the modified input state vector ($S'_h$), applicable to one of the hidden unit input groups (32d), at the reset gates (34), and applying the results thereof to the intra-unit connections (37) for obtaining connected, scaled and weighted modified input states at the hidden unit inputs of another input group (32c) of the gated recurrent unit layer (30),
- deriving the intermediate results of the first mapping (r), the second mapping (z), and the third mapping (u) of the gated recurrent unit layer (30) from different modified input state vectors ($S'_r$, $S'_z$, $S'_u$) applicable to the corresponding input group (32a-c),
- updating cell states to be stored, using the contributions of the previously stored cell states and the intermediate results of the third mapping (u) available at the update gates (33a-b), and
- deriving the new hidden state vector (h) at the hidden unit outputs (13) of the gated recurrent unit layer (30) by assigning to each component thereof the corresponding updated cell state (c).

11. A computer-implemented training method for training at least the binary-valued weights used for performing a prediction method according to any one of the claims 1 to 10, comprising the steps:

- providing a training set for supervised learning of weights, the training set comprising a sequence of input data and a corresponding sequence of target output data,
- providing a corresponding adjustable weight for each binary-valued weight associated with an input connection (15a-b) or a hidden layer connection (12, 14a-b) of the recurrent neural network (16), and initializing the adjustable weights,
- performing at least once a training pass comprising the steps:

  ◦ performing the steps of the prediction method, using at least a sub-sequence of input data of the training set as input data (X) applicable to the plurality of input connections and using the corresponding adjustable weights subject to a binarization function as binary-valued weights associated with input connections (15a-b) or hidden layer connections (12, 14a-b) of the recurrent neural network (16),
  ◦ determining a contribution to a cost function, based on a deviation of at least one generated predictive output datum (y) from at least one corresponding target output datum of the training set,
  ◦ updating the adjustable weights such that the updated adjustable weights reduce the contribution to the cost function,

- binarizing each of the updated adjustable weights obtained during the most recent training pass, and assigning the result thereof to the corresponding binary-valued weight.

12. A computer program product comprising instructions which, when the program is executed by a computer, perform the steps of a method according to any of the previous claims.

13. A computer-readable data carrier comprising instructions which, when executed on a computer, cause the computer to perform the steps of a method according to any of claims 1 to 11.

14. A data processing device (60) comprising means for carrying out the steps of a prediction method according to any one of the claims 1 to 10.

15. A processing device according to claim 14, further comprising a memory unit (61) for storing and retrieving the binary-valued weights of the recurrent neural network (16), and wherein means for carrying out the steps of the prediction method comprises an arithmetic processing unit (62) for performing a plurality of binary XNOR operations on pairs of single bits and for performing population count operations on results obtained from the plurality of binary XNOR operations.

**FIG. 1**

**FIG. 2**

**FIG. 3**

FIG. 4

**FIG. 5**

**FIG. 6**

Europäisches
Patentamt

European
Patent Office

Office européen
des brevets

# EUROPEAN SEARCH REPORT

**Application Number**

EP 18 21 3163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XUAN LIU ET AL: "Binarized LSTM Language Model", PROCEEDINGS OF THE 2018 CONFERENCE OF THE NORTH AMERICAN CHAPTER OF THE ASSOCIATION FOR COMPUTATIONAL LINGUISTICS: HUMAN LANGUAGE TECHNOLOGIES, VOLUME 1 (LONG PAPERS), 6 June 2018 (2018-06-06), pages 2113-2121, XP055593420, Stroudsburg, PA, USA DOI: 10.18653/v1/N18-1192 * abstract * * page 2113, left-hand column, line 25 - page 2120, right-hand column, line 5 * ----- | 1-15 | INV. G06N3/04 G06N3/08 |
| Y | Jimmy Lei Ba ET AL: "Layer Normalization", , 21 July 2016 (2016-07-21), XP055595192, Retrieved from the Internet: URL:https://arxiv.org/pdf/1607.06450.pdf [retrieved on 2019-06-11] * abstract * * page 1, line 27 - page 10, line 36 * ----- | 1-15 | |
| A | Anonymous: "Gated recurrent unit - Wikipedia", , 27 March 2018 (2018-03-27), XP055508773, Retrieved from the Internet: URL:https://en.wikipedia.org/w/index.php?title=Gated_recurrent_unit&oldid=832718321 [retrieved on 2018-09-21] * the whole document * ----- -/-- | 1-15 | **TECHNICAL FIELDS SEARCHED (IPC)** G06N |

The present search report has been drawn up for all claims

| Place of search | Date of completion of the search | Examiner |
|---|---|---|
| The Hague | 11 June 2019 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 21 3163

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 941 900 B1 (HORN DANIEL R [US] ET AL) 10 April 2018 (2018-04-10) <br> * figures 1-6 * <br> * column 1, line 6 - column 3, line 11 * <br> * column 3, line 48 - column 19, line 23 * <br> ----- | 1-15 | |
| A | Weiyizheng Yinatang: "BinarizedNeuralNetworksforLanguageModeling", , 19 June 2016 (2016-06-19), XP055595242, Retrieved from the Internet: URL:https://cs224d.stanford.edu/reports/weiyi.pdf [retrieved on 2019-06-11] * abstract * * figure 4.3.1 * <br> ----- | 1-15 | |

TECHNICAL FIELDS
SEARCHED       (IPC)

The present search report has been drawn up for all claims

| Place of search | Date of completion of the search | Examiner |
|---|---|---|
| The Hague | 11 June 2019 | Freitas, Arthur |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 21 3163

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2019

| Patent document cited in search report | | Publication date | Patent family member(s) | | Publication date |
|---|---|---|---|---|---|
| US 9941900 | B1 | 10-04-2018 | US 9941900 | B1 | 10-04-2018 |
| | | | US 10177783 | B1 | 08-01-2019 |
| | | | WO 2019070345 | A1 | 11-04-2019 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- XNOR-Net: ImageNet Classification Using Binary Convolutional Neural Networks. **RASTEGARI et al.** ECCV 2016 Lecture Notes in Computer Science. Springer, 2016, vol. 9908

- **ARDAKANI et al.** *Learning Recurrent Binary/Ternary Weights,* 2018
- **HOU et al.** *Loss-aware Binarization of Deep Networks,* November 2016